**Europäisches Patentamt**

**European Patent Office**

**Office européen des brevets**

(19)

(11)  **EP 0 741 147 A1**

(12)  **EUROPÄISCHE PATENTANMELDUNG**

(43) Veröffentlichungstag:
06.11.1996  Patentblatt 1996/45

(51) Int. Cl.$^6$: **C08F 12/04**, C08L 25/02

(21) Anmeldenummer: 96106513.3

(22) Anmeldetag: 25.04.1996

(84) Benannte Vertragsstaaten:
**BE DE ES FR GB IT NL**

(30) Priorität: **05.05.1995 DE 19516563**

(71) Anmelder: **BASF AKTIENGESELLSCHAFT**
**67056 Ludwigshafen (DE)**

(72) Erfinder:
• **Knoll, Konrad, Dr.**
**67069 Ludwigshafen (DE)**
• **Loth, Wolfgang, Dr.**
**67098 Bad Dürkheim (DE)**
• **Gausepohl, Hermann, Dr.**
**67112 Mutterstadt (DE)**

(54) **Verfahren zur Herstellung von Styrol-Oligomeren und deren Verwendung als Schmiermittel in Thermoplasten**

(57)  Verfahren zur Herstellung von vinylaromatischen Oligomeren, die sich als Schmiermittel für hochmolekulare Polymerwerkstoffe eignen, durch anionische Polymerisation des entsprechenden vinylaromatischen Monomeren - z.B. Styrol - in Gegenwart eines Katalysators auf der Grundlage eines Gemisches eines Metallalkyls, eines Metallalkoxylats, eines tertiären Amins und eines CH-aciden Kettenlängenreglers, die nach diesem Verfahren erhaltenen Oligomeren mit einem zahlenmittleren Polymerisationsgrad von 5 bis 40, sowie die Mischung der Oligomeren mit einem oder mehreren Styrol (co-)polymeren.

Printed by Rank Xerox (UK) Business Services
2.13.8/3.4

**Beschreibung**

Die Erfindung betrifft im wesentlichen von Di- und Trimeren freie Styrol-Oligomere, die als Gleitmittel in Styrolpolymerwerkstoffen eingesetzt werden können.

Styrolpolymerwerkstoffe werden zur besseren Verarbeitung auf scherenden oder knetenden Maschinen (Extruder, Spritzgußmaschinen) im allgemeinen mit Gleitmitteln versetzt: Bei der Verarbeitung von Styrolpolymeren durch Spritzguß ist eine möglichst gute Fließfähigkeit erwünscht, damit eine hohe Durchsatzleistung erzielt und komplizierte Formen mit engen und langen Fließwegen möglich werden. Einer Verbesserung der Fließfähigkeit durch Erhöhung der Verarbeitungstemperatur sind jedoch natürliche Grenzen gesetzt.

Man setzt deshalb speziell Styrolpolymerisaten Gleit- oder Schmiermittel zu, die die Schmelzviskosität erniedrigen. Sie werden entweder dem fertigen Kunststoff zugemischt oder den Monomeren schon vor der Polymerisation zugesetzt, was zu einer homogeneren Verteilung führt. Konventionelle Schmiermittel wie Mineralöle, Stearate, Palmitate, Phthalate oder langkettige aliphatische Alkohle, deren Ester und langkettige Carbonsäureamide haben jedoch jeweils einige der folgenden Nachteile: Sie setzen den Erweichungspunkt des Polymeren stark herab, verschlechtern dessen mechanische Festigkeit, bewirken Verfärbungen oder führen bei transparenten Polymerisaten zu Trübungen. Manche Gleitmittel haben auch Nachteile beim Gebrauch der hergestellten Artikel, wie Verpackungsmitteln, da sie sich z.B. gegenüber Lebensmitteln nicht geruchsneutral verhalten. Als Fremdsubstanzen neigen sie u.a.zur Unverträglichkeit mit den Styrolpolymerisaten und somit zum Auswandern (Migration), wodurch sie in die verpackten Waren gelangen.

Kurzkettige, niedermolekulare Polymere, d.h. Oligomere sind als normale Mitglieder einer Kettenlängenpopulation natürliche Begleitstoffe in Hochpolymeren. Sie sind i.a. mit ihren hochpolymeren Verwandten verträglich und sollten theoretisch eine gewisse Schmierwirkung haben. In der DE-AS 1 245 594 und den US-PSen 2 454 851 und 3 303 159 werden daher niedermolekulare, radikalisch hergestellte Styrolpolymerisate als Schmiermittel für hochmolekulare Styrolpolymerisate empfohlen.

Allerdings wird eine gute Verbesserung der Fließfähigkeit nur erzielt, wenn die Molmasse der betreffenden Oligomerfraktion niedrig ist, was aber bei nicht erfindungsgemäßen, bei der radikalischen Polymerisation nebenher gebildeten und daher breit verteilten Oligomeren die mechanischen Eigenschaften wie Zugfestigkeit und Zähigkeit beeinträchtigt. Auch die Wärmeformbeständigkeit geht bei Produkten mit einem höheren Anteil an niedermolekularen Oligomeren stark zurück.

Soweit niedermolekulare Polymere bei der Polymerisation selbst gebildet werden, weisen sie eine sehr breite Molmassen-Verteilung auf; sie enthalten erhebliche Mengen an Niedrigsiedern, d.h. sie bestehen überwiegend aus Di- und Trimeren mit einem relativ hohen Dampfdruck. Wenn man sie in den gebildeten Polymeren beläßt, neigen sie zum Auswandern, was den Einsatz in Lebensmittelanwendungen stark einschränkt und auch zu Belägen auf Werkzeugen und Produkten führt.

Die während der Polymerisationsreaktion gebildeten Oligomeren wirken aufgrund ihres hohen Gehaltes an olefinischen Doppelbindungen überdies als Regler, d.h. sie begünstigen die Bildung zusätzlicher Oligomerer, wenn man sie dem Monomeren schon bei der Polymerisation zusetzt.

Auf jeden Fall verringeren Oligomere als olefinisch ungesättigte Verbindungen die Alterungsstabilität und führen zum Vergilben der Kunststoffartikel. Durch Hydrierung (diskontinuierlich, wie in der US-P 2 386 507 beschrieben) läßt sich theoretisch dieser Nachteil beheben. Die Hydrierung von Polymerisaten und die Entfernung des Hydrierkatalysators sind jedoch aufwendige Arbeitsvorgänge.

Ist die Molmasse der Oligomerfraktion dagegen zu hoch, sind zwar die mechanischen Eigenschaften und die Wärmeformbeständigkeit nahezu unverändert; dafür wird aber die Fließfähigkeit nur wenig angehoben.

Diese Nachteile könnten weitgehend vermieden werden, wenn man eng verteilte Oligostyrole mit hohem Sättigungsgrad oberhalb der Molmasse etwa der Tri- oder Tetrameren als Schmiermittel einsetzen könnte. Die gezielte Herstellung von Oligostyrol durch radikalische Polymerisation in Masse oder in Lösung sowie durch anionische Polymerisation unter Einsatz von Alkali- und Erdalkali-Alkyl ist an sich bekannt, jedoch ist es bisher nicht gelungen, Oligostyrole mit enger Molgewichtsverteilung und hohem Sättigungsgrad (d.h. geringem olefinischem Doppelbindungsanteil) preiswert herzustellen.

Styrololigomere aus der anionischen Polymerisation könnten bei geeigneter Molmasse der Oligomerfraktion die Fließfähigkeit stark verbessern, ohne einen nennenswerten negativen Einfluß auf die mechanischen und thermischen Eigenschaften zu haben. Der Gehalt an Niedrigsiedern ist bei gut entgasten Produkten minimal. Nachteilig ist lediglich, daß die anionische Polymerisation ein stöchiometrisches Verhältnis des Polymerisationsauslösers (Initiators) zum gebildeten Makromolekül von 1:1 erfordert, sodaß bei der Herstellung von Polymeren niedriger Molmasse eine erhebliche Menge an Metallalkyl verbraucht wird, was für die Praxis zu kostspielig ist.

Es ist deshalb bisher trotz vieler Versuche kein Handelsprodukt auf der Grundlage von Styrol-Oligomeren zur Fließverbesserung auf den Markt gekommen, welches die geschilderten Nachteile nicht aufweist und eine preiswerte Alternative zu Mineralöl darstellt. Aufgabe der Erfindung war es deshalb, die genannten Nachteile zu überwinden und kostengünstige und chemisch indifferente Gleitmittel für Styrolpolymerisate zu schaffen.

Es bestand insbesondere die Aufgabe, vinylaromatische Monomere zu gesättigten niedermolekularen Polymeren (Oligomeren) mit enger Molmassenverteilung und minimalem Anteil an Oligomeren unter Verwendung anionischer Initiatoren zu polymerisieren, die eine mittlere Molmasse unter etwa 3500 g/mol aufweisen, wobei der zahlenmittlere Polymerisationsgrad $P_n$, berechnet aus der zahlenmittleren Molmasse des Polymeren $M_n$, nicht höher als etwa 1/20 des Molverhältnisses von Monomer zu Initiator sein sollte.

Die Aufgabe wird erfindungsgemäß dadurch gelöst, daß man die Polymerisation des oder der vinylaromatischen Monomeren anionisch in einem inerten Solvens und in Gegenwart eines bei der anionischen Polymerisation wirksamen Übertragungsmittels vornimmt.

Es wurde gefunden, daß bei der durch Metallalkyl in Gegenwart von Cokatalysatoren vom Metall-Alkoxid-Typ, wie weiter unten noch näher erläutert wird, und Aktivierung durch tertiäre Amine initiierten anionischen Polymerisation von vinylaromatischen Verbindungen in einem inerten Medium CH-acide Verbindungen eine ausreichend hohe Übertragungsrate der "lebenden" Kette erreichen und daß dabei gegenüber den eingesetzten Mengen an Initiator und Cokatalysator deutlich unterstöchiometrische Molmassen erhalten werden.

Alkylaromaten wie Toluol oder Ethylbenzol, deren Fähigkeit zur Kettenübertragung an sich bekannt ist, weisen jedoch gewöhnlich nur eine sehr geringe Übertragungskonstante auf (im Bereich etwa von $10^{-6}$, vgl. A. L. Gatzke, J. Polym. Sci. A1, Vol. 7, S. 2281 ff. (1969)). Bei Anwendung der erfindungsgemäßen Maßnahmen wird dagegen überraschenderweise eine für den erfindungsgemäßen Zweck ausreichend hohe Übertragungsrate erreicht.

Ein Erfindungsgegenstand ist demnach die Herstellung von vinylaromatischen Oligomeren durch anionische Polymerisation des entsprechenden vinylaromatischen Monomeren in Gegenwart eines Katalysators auf der Grundlage eines Metallalkyls oder Metallaryls, wobei als Katalysator ein Gemisch eines Metallalkyls (-aryls), eines Metallalkoxylats und eines tertiären Amins eingesetzt wird und die Molmasse durch einen Kettenlängenregler eingestellt wird, der das lebende Ende der wachsenden Kette auf eine neue Kette überträgt; die Erfindung betrifft ferner die erhaltenen vinylaromatischen Oligomeren sowie deren Verwendung als Zusatz zu vinylaromatischen Polymerkunststoffen und die mit den Oligomeren vermischten Polymerkunststoffe.

Der Kettenlängenregler (Übertragungsagens) wird am besten zu Beginn der Polymerisation in einem solchen Anteil vorgelegt, daß das Molverhältnis von Monomer zu Übertragungsagens gleich dem gewünschten Polymerisationsgrad $P_n$ des Polymeren ist. Die Molzahl des metallorganischen Initiators, bezogen auf die Molzahl des Übertragungsagens beträgt dabei 1/20 oder weniger. Durch den Zusatz von Promotoren, die Geschwindigkeit der Zugabe des oder der Monomeren und Wahl einer geeigneten Temperatur erreicht die Übertragungsrate des Metallkomplexes die gleiche Größenordnung wie die Geschwindigkeit der Polymerisation. Es besteht die Vorstellung, daß dabei eine Übertragung von den aktiven, also wachstumsfähigen Ketten auf das Übertragungsagens stattfindet unter Bildung toter (aber unter den erfindungsgemäßen Bedingungen reaktivierbarer) und neuer, wachstumsfähiger Polymerer.

Der Vorteil der erfindungsgemäß hergestellten Oligomeren gegenüber herkömmlichen radikalisch polymerisierten Oligomeren ist ihr besonders geringer Anteil an Di- und Trimeren. Vorteil gegenüber konventionell-anionisch hergestellten Oligomeren ist der hohe Grad an Gesättigtheit. Der Vorteil des Herstellwegs ist der wesentlich verringerte Initiatorverbrauch und somit die Chance einer preiswerten Herstellung.

Es besteht die Vorstellung, die jedoch die Erfindung nicht begrenzen und lediglich die zweckmäßigen Maßnahmen zur Durchführung der Erfindung erläutern soll, daß die nachfolgenden Umsetzungen und Gleichgewichte sich abspielen bzw. bestehen:

Dabei sei das Übertragungsagens $Ar\text{-}CH_2\text{-}H$, das Monomer $Ar\text{-}RC{=}CH_2$ und das metallorganische Reagens $R'\text{-}M$, wobei R für Wasserstoff oder z.B. $C_1$- bis $C_{10}$-Alkyl (Methyl, Ethyl, Propyl...), Ar für Aryl (Phenyl, Toluyl, Xylyl oder Alkylaryl), und R' für Alkyl oder Aryl steht und ferner X für R' oder Ar $CH_2$- und M für metallorganisch gebundenes Alkalimetall zugrunde:

$$R'\text{-}M + ArRC{=}CH_2 \rightarrow R'\text{-}CH_2\text{-}CRAr\text{-}M \tag{1}$$

$$R'\text{-}CH_2\text{-}CRAr\text{ - }M + n\ ArRC{=}CH_2 \rightarrow R'\!\!\left(CH_2CRAr\right)_{n+1}\!\text{-}M \tag{2}$$

$$Ar\text{-}CH_2H + R'\text{-}M \longleftrightarrow Ar\text{-}CH_2\text{-}M + R\text{-}H \tag{3}$$

$$Ar\text{-}CH_2\text{-}M + ArRC{=}CH_2 \rightarrow Ar\text{-}CH_2\text{-}CH_2\text{-}CRAr\text{-}M \tag{4}$$

$$Ar\text{-}CH_2\text{-}CH_2\text{-}CRAr\text{-}M + n\ Ar\text{-}RC{=}CH_2 \rightarrow Ar\text{-}CH_2\!\!\left(CH_2CRAr\right)_{n+1}\!\text{-}M \tag{5}$$

$$X\!\!\left(CH_2CRAr\right)\!M + ArCH_2\text{-}H \longleftrightarrow X\!\!\left(CH_2CRAr\right)_m\!\text{-}H + ArCH_2\text{-}M \tag{6}$$

$$X\!\!\left(CH_2\text{-}CRAr\right)_m\!\text{-}M + X\!\!\left(CH_2\text{-}CRAr\right)_n\!\text{-}H \longleftrightarrow X\!\!\left(CH_2\text{-}CRAr\right)_m\!\text{-}H + X\!\!\left(CH_2\text{-}CRAr\right)_n\!\text{-}M \tag{7}$$

$$ArCH_2\text{-}M + ArCH_2\text{-}H \longleftrightarrow ArCH_2\text{-}H + ArCH_2\text{-}M \tag{8}$$

Die gedachten Gleichungen sollten dann gelten, wenn die Basizität des metallorganischen Reagens R'- M mindestens annähernd so groß ist wie die der korrespondierenden Base des Übertragungsagens $ArCH_2$-H und mindestens der des lebenden Polymeren X-$(CH_2$-CRAr-$)_n$-M entspricht.

Aus dieser Überlegung folgt für die beim Herstellverfahren zu ergreifenden Maßnahmen folgendes:

Zweckmäßig werden Lösungsmittel, Übertragungsagens, metallorganische Base und Aktivatoren vorgelegt und die Mischung auf eine Temperatur gebracht, bei der noch keine β-Hydrid-Eliminierung, d.h. irreversible Zerstörung der metallorganischen Base eintritt.

Die Reaktionstemperatur beträgt zweckmäßig zwischen 40 und 100°C, bevorzugt 60 - 80°C. Bei Temperaturen unter 40°C ist die Reaktivität zu gering und bei Temperaturen oberhalb von etwa 100°C wird angesichts der relativ langen Zulaufzeit erheblicher thermischer Abbruch der lebenden Anionen beobachtet. Als Grenztemperatur für die Umsetzung kann eine Temperatur von etwa 120°C gelten.

Unter diesen Bedingungen laufen die Umsetzungen (3) und (8) ab. Für R' = Alkyl wie z. B. n-Butyl oder s-Butyl wird die Reaktion (3), welche die Deprotonierung des Übertragungsagens durch die metallorganische Base beschreibt, irreversibel. Die Reaktion (8), welche die Transmetallierung des Übertragungsagens beschreibt, ist entartet und damit unproduktiv, tritt aber auf, da erfindungsgemäß bis zu 5 % des Übertragungsagens metalliert sein können.

Initiierung:

Zu Beginn des Monomerzulaufes tritt die Initiierung durch das metallierte Übertragungsagens gemäß Gleichung (4) ein; sollte metallorganische Base vorhanden sein, wirkt auch sie als Initiator gemäß Gleichung (1).

Kettenwachstum:

Die initiierte Spezies kann entsprechend Gleichung (2) und (5) weitere Monomereinheiten addieren. Entscheidend für die Herstellung der erfindungsgemäßen Polymeren ist jedoch das Protonierungs-/Deprotonierungsgleichgewicht in Gleichung (6), welches die Aktivierung des restlichen Überträgers durch eine lebende Polymerkette beschreibt, und das Gleichgewicht zwischen carbanionischen und protonierten Kettenenden gemäß Gleichung (7).

Gegenion, Aktivatoren, Zulaufgeschwindigkeit und Temperatur sind so zu wählen, daß die Einstellung der Gleichgewichte (6) und (7) so schnell wird wie das Kettenwachstum (2) und (5). Ist diese Bedingung erfüllt, werden Molmassenverteilungen erhalten, die annähernd der Poisson-Verteilung mit $D = M_w/M_n = 1 + 1/P_n$ entsprechen, wobei $P_n$ sich in bekannter Weise durch den Quotienten aus der Anzahl Mole des Monomeren und des Übertragungsagens bei vollständigem und irreversiblem Ablauf von Gleichung (3) ergibt. Andernfalls ist $P_n$ = Molzahl$_{(Monomer)}$ / (Molzahl$_{(Übertragungsagens)}$ + Molzahl$_{(metallorganische Base)}$).

Die Zugabe von Aktivatoren und Cokatalysatoren zur anionischen Polymerisation ist zum Beispiel in der US-PS 4 268 705 beschrieben, welche die Herstellung von Styrol-Butadien-Cooligomeren zum Ziel hat. Weiterhin wird von Craig, Xiao, Stickler, Gordon in: Polymer Preprints, ACS, Div. Polym. Chem., 33/2, 190-191 (1992) die Wirkung von Cokatalysatoren auf die Polymerisationsgeschwindigkeit von Styrol beschrieben, und Brandsma, Verkruijsse beschreiben in: "Preparative Polar Organometallic Chemistry", Vol. 1, N.Y. (1987) den Einfluß von Cokatalysatoren und Aktivatoren auf präparative Vorgänge.

Die eingesetzten Substanzen und das Herstellungsverfahren werden nachfolgend beschrieben.

Vinylaromatische Verbindungen im Sinne der Erfindung sind anionisch polymerisierbare Substanzen der allg. Formel $R_1 R_2$ C=$CH_2$, in der $R_1$ für Wasserstoff, einen aromatischen oder aliphatischen Rest mit 1 - 12 C-Atomen und $R_2$ = für einen mit Wasserstoff, aliphatischem oder aromatischem Rest mit 1 - 20 C-Atomen substituierten Phenylring steht. Beispiele für vinylaromatische Verbindungen sind Styrol, alpha-Methylstyrol, 2-Methylstyrol, 4-Methylstyrol, Diethylstyrol, 4-Cyclohexylstyrol, 4-Phenylstyrol, Trimethylstyrol, 2-Ethyl-4-benzylstyrol oder 1,1-Diphenylethylen.

Als Metallalkyle bzw. Metallaryle werden die bei der anionischen Polymerisation bekannten Initiatoren (R-M) eingesetzt, wobei M ein Alkalimetall (Li, Na, K) und R ein aliphatischer, cycloaliphatischer oder aromatischer Kohlenwasserstoffrest sein kann. Die Anzahl der Kohlenstoffatome des Restes R ist nicht begrenzt, liegt aber für technische Anwendungen zweckmäßig bei unter 20. Beispiele aliphatischer Lithiuminitiatoren sind n-Butyllithium, sec.-Butyllithium, tert.-Butyllithium. Als Beispiel eines aromatischen Lithiuminitiators sei Phenyllithium genannt. Ein cycloaliphatischer Lithiuminitiator ist zum Beispiel Cyclohexyllithium.

Als Cokatalysatoren werden Metall-Alkoxide vom Typ M-O-X eingesetzt. M kann dabei Na, K oder ebenfalls Lithium sein, X kann einer der bei den Metall-Alkylen genannte Reste R sein. Als Beispiel sei K-tert.-Butylat genannt.

Als Aktivatoren eignen sich ein- oder mehrwertige tertiäre aliphatische, cycloaliphatische oder aromatische Amine, wie Trimethylamin, Triethylamin, N-Methylcyclohexylamin, Tetramethylendiamin, Dimethylanilin. Besonders geeignet sind chelatbildende Di- und Oligoamine mit 2 bis 5 Amino-stickstoffatomen.

Als Kettenlängenregler eignen sich Kohlenwasserstoffe mit dissoziierbaren Protonen (CH-acide Verbindungen) wie Toluol, o,m,p-Xylol, Cumol, Ethylbenzol und Ethyltoluol.

Als Lösungsmittel werden inerte Kohlenwasserstoffe, wie n- oder iso-Alkane und Cycloalkane eingesetzt. Als Beispiel seien n-Hexan, Cyclohexan oder i-Oktan genannt.

Polare Modifikatoren wie Ether (z.B. THF) können bei der Umsetzung zugegen sein. Es empfiehlt sich wegen der Unlöslichkeit der Metall-Alkoxide in Kohlenwasserstoffen zuerst eine homogene Lösung von Alkoxid, Aktivator und Metallalkyl in z.B. THF herzustellen, diese mit dem Übertragungsagens zu verdünnen und erst dann den Kohlenwasserstoff zuzugeben.

Bei der Herstellung der vinylaromatischen Oligomeren wird das inertisierte Lösungsmittel, der Kettenlängenregler, der Initiator, der Cokatalysator und der Aktivator vorgelegt und anschließend halbkontinuierlich das Monomere über mehrere Stunden zugesetzt, so daß eine Lösung mit 20 - 80 Gew-% Oligomeren erhalten wird. Die "lebende" Oligomer-Lösung wird schließlich mit einem Protonendonator (z.B. Wasser/Methanol) zersetzt und zur Entfernung der Katalysatorbestandteile erst sauer und anschließend mit Wasser neutral gewaschen. Dann werden die Oligomeren durch Erhitzen und Entspannungsverdampfen z. B. in einem Dünnschicht- oder Film-Verdampfer von Lösungsmittel und Verunreinigungen befreit.

Die Oligomere weisen i.a. einen zahlenmittleren Polymerisationsgrad von 5 bis 40 auf mit weniger als 10 Gew.-% Anteilen mit einer Molmasse von unter 350 g/mol. Die schwach gelblichen Oligomeren sind bei einem mittleren Polymerisationsgrad von unter 10 honigartig, bei einem mittleren Polymerisationsgrad über 10 bei Raumtemperatur ein spröder Feststoff, der leicht zu pulverisieren ist. Zweckmäßig haben die erfindungsgemäßen Oligomeren ein mittleres Molekulargewicht von 500 bis 10.000 g/mol, vorzugsweise 600 bis 5.000 g/mol, besonders bevorzugt 800 bis 3000 g/mol.

Ein weiterer Gegenstand der Erfindung sind thermoplastische Formmassen auf Basis von Styrol(co)polymerisaten, die z.B. bis 20 % des erfindungsgemäßen Styrololigomeren enthalten.

Als Styrol(co)polymerisate kommen in Frage: Homopolystyrol, vorzugsweise mit einem Molekulargewicht von 140.000 bis 500.000 g/mol; Copolymerisate des Styrols mit bis zu 50 Gew-% an üblichen Comonomeren, wie alpha-Methylstyrol, Acrylnitril, Methylmethacrylat oder Maleinsäureanhydrid; kautschukmodifizierte Styrolpolymerisate, wie schlagfestes Polystyrol, welches durch Polymerisation in Gegenwart von etwa 2 bis 18 Gew.-% eines Kautschuks, z.B. Polybutadien, einem Butadien-Styrol-Blockcopolymeren oder einem Ethylen-Propylen-Dien-Terpolymeren hergestellt wird, oder ABS- bzw. ASA-Polymere, die Pfropfpolymerisate von Styrol und Acrylnitril auf Butadien- bzw. Acrylesterpolymerisate darstellen.

Die Zugabe der Oligomeren zu den Styrol(co)polymerisaten kann auf verschiedene Weise geschehen: Man kann sie im geschmolzenen Zustand auf einer üblichen Mischmaschine, z.B. Banbury-Mischer, Extruder, Kneter einmischen. Vorzugsweise werden die Oligomeren aber vor der Polymerisation mit den Monomeren vermischt oder nach der Polymerisation der noch zu entgasenden Polymerlösung zugesetzt.

Die erfindungsgemäßen thermoplastischen Formmassen sind auch bei relativ niedriger Verarbeitungstemperatur noch gut fließfähig, ohne daß die Wärmeformbeständigkeit oder mechanische Festigkeit darunter leiden.

Die Oligomeren sollen in Mengen von 1 bis 20, vorzugsweise 2 bis 10 Gew.-% in dem Styrolpolymerisat enthalten sein, wobei außer den erfindungsgemäßen Oligomeren auch noch andere konventionelle Schmiermittel, wie z.B. Mineralöle, eingesetzt werden können. Darüber hinaus können die erfindungsgemäßen Formmassen Zusätze, wie Verstärkungskautschuke, andere Kunststoffe, Füllstoffe, Farbstoffe, Pigtnente, Antioxidantien, Stabilisatoren, Weichmacher, Antistatika oder Flammschutzmittel in üblichen Mengen enthalten.

Beispiele 1 bis 7

1. Herstellung des Styrol-Oligomeren

Cyclohexan, Ethylbenzol, Diethylbenzol, p-Xylol, Tetramethylethylendiamin (TMEDA) und frisch destilliertes Styrol wurden vor der Verwendung über Aluminiumoxidperlen getrocknet. sec-Butyllithium wurde als 1 molare Lösung in Hexan/Cyclohexan eingesetzt.

Die Versuche wurden in einem 10 l-Edelstahlreaktor mit Kreuzbalkenrührer unter rigorosem Ausschluß von Luft und Feuchtigkeit durchgeführt. Zuerst wurde in einem separaten Gefäß der Coinitiator (tert.-Butoxy-Kalium) in der Hilfsbase (TMEDA) und 100 g Übertragungsreagens in den jeweils in der nachstehenden Tabelle 1 angegebenen Mengen bei 70°C bis zur Klärung gelöst und die Mischung dann in den Reaktor überfiltriert, der zuvor unter Stickstoff mit Lösemittel und/oder restlichem Übertragungsreagenz beschickt worden war. Die Lösung wurde mit Butyllithium bei 70°C bis zur Rotfärbung austitriert, dann die berechnete Menge Initiator zugegeben und der Styrolzulauf über eine Dosierpumpe gestartet, wobei während des Zulaufs die Innentemperatur bei 70°C konstant gehalten wurde. Die Zulaufrate des Styrols wurde so gewählt, daß bei konstantem Fluß die gesamte Styrolmenge nach der angegebenen Zeit zudosiert war. 15 min nach Beendigung des Styrolzulaufs wurde die Lösung mit Isopropanol farblos gestellt, 1:1 (v/v) mit Cyclohexan verdünnt, zweimal mit Wasser und je einmal mit 0,1%iger wäßriger Schwefelsäure und 1-%iger Natriumhydrogencarbonatlösung bis zur Neutralität ausgeschüttelt und das Cyclohexan abdestilliert.

**Patentansprüche**

1.  Verfahren zur Herstellung von vinylaromatischen Oligomeren durch anionische Polymerisation des entsprechenden vinylaromatischen Monomeren in Gegenwart eines Katalysators auf der Grundlage eines Metallalkyls, dadurch gekennzeichnet, daß als Katalysator ein Gemisch eines Metallalkyls, eines Metallalkoxylats und eines tertiären Amins eingesetzt wird und die Molmasse durch einen Kettenlängenregler eingestellt wird.

2.  Verfahren nach Anspruch 1, dadurch gekennzeichnet, daß als Kettenlängenregler eine CH-acide Verbindung eingesetzt wird.

3.  Verfahren nach Anspruch 1, dadurch gekennzeichnet, daß der Initiator in einer Menge, bezogen auf die Zahl der zu bildenden Kettenmoleküle, von nicht mehr als 5 % der stöchiometrischen Menge eingesetzt wird.

4.  Verfahren nach Anspruch 1, dadurch gekennzeichnet, daß als Monomeres Styrol, kernalkyliertes Styrol, und/oder in alpha-Stellung aryl-, aralkyl- oder alkylsubstituiertes Styrol eingesetzt werden.

5.  Verfahren nach Anspruch 1, dadurch gekennzeichnet, daß als Metallalkoxylat (Cokatalysator) Kalium-Alkoxid eingesetzt wird.

6.  Verfahren nach Anspruch 1, dadurch gekennzeichnet, daß als Aktivator ein tertiäres Amin eingesetzt wird.

7.  Gemisch von Oligomeren eines oder mehrerer vinylaromatischer Monomerer mit einem zahlenmittleren Polymerisationsgrad von 5 bis 40, wie sie nach dem Verfahren eines der Ansprüche 1 bis 6 erhalten werden und ferner dadurch gekennzeichnet, daß sie, ermittelt durch Gelpermeationschromatographie, weniger als 10 Gew.-% Anteile mit einer Molmasse von unter 350 g/mol aufweisen.

8.  Gemisch von Oligomeren nach Anspruch 7, enthaltend als Monomere Styrol und/oder 1,1-Diphenylethylen.

9.  Mischung von Oligomeren nach einem der Ansprüche 6 oder 7 mit einem oder mehreren Styrol(co-)polymeren im Gewichtsverhältnis von 1:99 bis 10:90, wobei das Verhältnis der Absenkung der Wärmeformbeständigkeit zur Fließverbesserung, gemessen als Vicat-Temperatur (VST B 50) bzw. als Schmelzindex (MVR, 200/5) je 1 % Oligomerzusatz kleiner als 10 ist.

10. Im wesentlichen transparente Mischung nach Anspruch 9, bei der das numerische Verhältnis der Absenkung der Wärmeformbeständigkeit zur Fließverbesserung, gemessen als Vicat-Temperatur (VST B 50) bzw. als Schmelzindex (MVR, 200/5) je 1 % Oligomerzusatz kleiner als 0,5 ist.

11. Mischung nach Anspruch 9, enthaltend als Styrol(co-)polymer ein durch einen butadienhaltigen Kautschuk schlagzäh modifiziertes Polystyrol, bei der das numerische Verhältnis der Absenkung der Wärmeformbeständigkeit zur Fließverbesserung, gemessen als Vicat-Temperatur (VST B 50) bzw. als Schmelzindex (MVR, 200/5) je 1 % Oligomerzusatz kleiner als 0,5 ist.

| Europäisches Patentamt | EUROPÄISCHER RECHERCHENBERICHT | Nummer der Anmeldung EP 96 10 6513 |
| --- | --- | --- |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
| --- | --- | --- | --- |
| D,A | US-A-4 268 705 (R. F. PALMER) --- | | C08F12/04 C08L25/02 |
| A | FR-A-2 075 655 (LITHIUM CORP. OF AMERICA) ----- | | |
| | | | **RECHERCHIERTE SACHGEBIETE (Int.Cl.6)** |
| | | | C08F |

Der vorliegende Recherchenbericht wurde für alle Patentansprüche erstellt

| Recherchenort | Abschlußdatum der Recherche | Prüfer |
| --- | --- | --- |
| DEN HAAG | 2.August 1996 | Cauwenberg, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)